# EUROPÄISCHE PATENTSCHRIFT

(11) **EP 1 421 751 B1**
(45) Veröffentlichungstag und Bekanntmachung des Hinweises auf die Patenterteilung: **09.02.2005**
(21) Anmeldenummer: 02764548.0
(22) Anmeldetag: 14.08.2002
(51) Int. Cl.: H04L 12/56, H04L 12/28, H04L 12/40, H04L 12/64

(54) **VERFAHREN ZUR PAKETDATENÜBERTRAGUNG**
METHOD FOR PACKET DATA TRANSMISSION
PROCEDE DE TRANSMISSION DE PAQUETS DE DONNEES

(30) Priorität: 27.08.2001 DE 10141815
(43) Veröffentlichungstag der Anmeldung: 26.05.2004
(73) Patentinhaber: SIEMENS AKTIENGESELLSCHAFT, 80333 München (DE)
(72) Erfinder: KERN, Ralf, 46399 Bocholt (DE); SCHÜLING, Jürgen, 46397 Bocholt (DE); BECKMÖLLER, Carola, 47495 Rheinberg (DE)
(86) Internationale Anmeldenummer: PCT/DE2002/002983
(87) Internationale Veröffentlichungsnummer: WO 2003/028311

(56) Entgegenhaltungen:
- EP-A- 1 089 502
- EP-A- 1 109 343
- US-B1- 6 262 994

## Beschreibung

Die Erfindung betrifft ein Verfahren zur Paketdatenübertragung.

In der Informations- und Telekommunikationstechnik ist die Segmentierung und sukzessive Übertragung von zu übertragenden Nutzdaten bekannt. Des Weiteren ist es bekannt diesen Datensegmenten, im Allgemeinen als Datenpakete bezeichnet, neben den Nutzdaten bzw. Nutzinformationen jeweils noch Steuerinformationen anzuhängen, die beispielsweise, die Adressierung, Sendefolge, Flusskontrolle und Fehlerkorrektur, so dass die Datenpakete dem richtigen Empfänger zugeordnet werden können sowie nach erfolgter Übertragung empfangsseitig eine etwaige Fehlerbehandlung durchgeführt und die Datenpakete - Datensegmente - wieder korrekt zusammengesetzt werden können.

Wenn ein derartiges Datenpaket bevor es über einen physikalischen Kanal übertragen wird, verschiedene Schichten durchläuft, denen wiederum jeweils Protokolle, insbesondere Fehlerprotokolle, zugeordnet sind - wie es beispielsweise gemäß dem OSI-Referenzmodell vorgesehen ist -, werden die Nutzdaten eines Datenpaketes zumeist in mehreren den einzelnen Schichten bzw. Protokollen zugeordneten Steuerinformationen mit jeweiligen Daten zur Fehlerkorrektur gekapselt.

Die so an die Nutzdaten angehängten Steuerinformationen haben zur Folge, dass sie die Kapazitäten der/des Übertragungskanals/Übertragungskanäle belegen und somit die Reduzierung der Nutzdatenrate bzw. des Nutzdatendurchsatzes zur Folge haben.

Aus der EP 1 089 502 A2 ist ein Funkkommunikationssystem sowie ein Verfahren bekannt, bei dem Parameter für die Übertragung von Audio- und Videodaten abhängig von Eigenschaften einer hierfür genutzte drahtlosen Verbindung eingestellt werden.

Aus der EP 1 109 343 A2 ist ein adaptives Verfahren zum Betreiben eines Kanalcodierers bekannt, welches aufgrund von Eigenschaften einer aktuellen drahtlosen Verbindung den Kanalcodierer dahingehend steuert, dass er zwischen verschiedenen Kanalcodierungsformen umschaltet.

Aus der US 6,262,924 B1 ist eine Anordnung zur Optimierung einer bidirektionalen Funkdatenübertragung bekannt, bei der eine Sendeeinrichtung verschiedene Modulationsarten einstellen kann.

Die der Erfindung zu Grunde liegende Aufgabe ist es eine Erhöhung des Nutzdatendurchsatzes zu erhöhen.

Diese Aufgabe wird durch die Merkmale des Patentanspruches 1 gelöst.

Bei dem erfindungsgemäßen Verfahren zur Paketdatenübertragung in einem Kommunikationssystem mit einem ersten Datenpakettyp und zumindest einem alternativen zweiten Datenpakettyp werden Qualitätsänderungen eines für eine Verbindung zwischen einer Datenquelle und Datensenke genutzten Übertragungskanals erfasst und abhängig von der erfassten Qualitätsänderung wird ein Datenpakettyp eines folgenden über den Übertragungskanal zu übertragenden Datenpaketes gewählt.

Das erfindungsgemäße Verfahren lässt sich vorteilhaft in einem Funk-Kommunikationssystem implementieren handelt.

Durch die Wahl eines zweiten Datenpakettyps, der einen niedrigeren Steuerdatenanteil als der erste Datenpakettyp aufweist im Fall, dass der Übertragungskanal eine gute Qualität hat, führt zu einer effektiveren Nutzung des Übertragungskanals.

Eine Weiterbildung hierzu ist die Wahl eines Datenpakettyps, die eine Fehlercodierung geringer Bitzahl aufweist. Diese Weiterbildung hat den Vorteil, dass bei der Fehlercodierung vorgesehene redundante Daten eingespart werden können, so dass der Steuerdatenanteil eines Pakets ohne Weglassen von Informationen reduziert werden kann.

Eine einfache Implementierung wird erzielt, wenn eine gute Qualität bei Erreichen eines ersten Schwellwertes durch eine die Qualität des Übertragungskanals wiedergebenden Größe signalisiert wird. Zudem lässt sich ein derartiger Schwellwert derart optimieren, dass ein Pakettypwechsel auch den -erwünschten Effekt - effektivere Nutzung des Übertragungskanals zur Erhöhung der Datenrate - erfüllt ist, ohne Steigerung der Zahl fehlerhafter Pakete.

Die Weiterbildung bei der bei schlechter Qualität der erste Datenpakettyp gewählt wird, wobei eine schlechte Qualität bei Erreichen eines zweiten Schwellwertes signalisiert wird, verhindert, dass kurz nach Wechsel des Datenpakettyps, beispielsweise nach Überschreiten des ersten Schwellwertes, ein weiterer Wechsel bei unmittelbar nachfolgendem Unterschreiten des ersten Schwellwertes erfolgt, so dass ein ständiges Wechseln welches bei einem Qualitätswert, der um den ersten Schwellwert pendelt, auftritt und damit verbundene unnötige Verzögerungen vermieden.

Wird die Qualitätsänderung auf Seiten der Datenquelle erfasst, kann die Zeitspanne zwischen Ermittlung der Qualität, Wechsel des Datenpakettyps und versenden von Datenpaketen dieses Pakettyps sehr gering gehalten werden.

Eine Erfassung der Qualitätsänderung auf Seiten der Datensenke hat dagegen den Vorteil, dass von der Datenquelle nicht erfassbare Qualitätsänderungen von der Datensenke, insbesondere durch eine dort ermittelte Fehlerrate, detektiert und zur Datenquelle übertragen werden, kann, so dass weitestgehend sichergestellt ist, dass auf alle Störungen des Übertragungskanals reagiert werden kann.

Verfahren nach einem der vorhergehenden Ansprüche, dadurch gekennzeichnet, dass zur Bestimmung der Qualitätsänderung eine Anzahl von Paketwiederholungen erfasst wird und/oder eine die Qualität des Übertragungskanals wiedergebende Feldstärkemessung empfangener Signale gemessen wird.

Durch eine Implementierung des Verfahrens in einem Funk-Telekommunikationssystem, welches nach dem Bluetooth-Standard funktioniert, weist den Vorteil auf einfach realisierbar zu sein, da gemäß Bluetooth-Standard unterschiedliche Datenpakettypen, beispielsweise DM5, DH5 oder AUX1, vorgesehen sind, die sich insbesondere in der Zahl für ein Fehlerkorrektur vorgesehenen Bits unterscheiden.

Einfach zu Implementierende vorteilhafte Datenpaketkombinationen ergeben sich, wenn
a) der erste Datenpakettyp gemäß Bluetooth als ein DM5 Paket ausgestaltet wird,
b) der zweite Datenpakettyp gemäß Bluetooth als ein DH5 Paket ausgestaltet wird.
   oder
c) der erste Datenpakettyp gemäß Bluetooth als ein DM5 Paket ausgestaltet wird,
d) der zweite Datenpakettyp gemäß Bluetooth als ein AUX1 Paket ausgestaltet wird,
wobei weitere beliebige Kombinationen der gemäß Bluetooth vorgeschlagenen Datenpakettypen denkbar sind, solange sie den gewünschten Effekt - effektivere Nutzung des Übertragungskanals zur Erhöhung der Datenrate - erzielen.

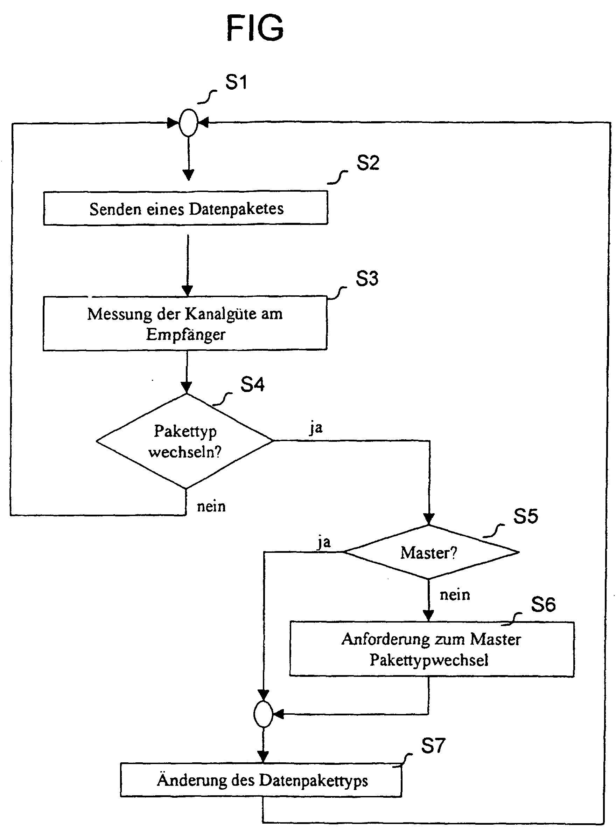

Ein Ausführungsbeispiel und weitere Vorteile der Erfindung werden anhand der einzigen FIGUR erläutert. Diese zeigt:
Ein Ablaufdiagramm des erfindungsgemäßen Verfahrens

Die Figur zeigt ein Ablaufdiagram einer adaptive Datenpakettypauswahl in einem Funk-Telekommunikationssystem, welches gemäß dem Kurzstreckenfunkstandard Bluetooth funktioniert, zur Optimierung des Datendurchsatzes bei qualitativen Änderungen des Übertragungskanals.

Das Verfahren befindet sich in einem ersten Schritt S1 in einem Ausgangszustand. In diesem Zustand läuft das Verfahren, beispielsweise gesteuert durch einen Mikroprozessor eines ein Bluetooth-Funkmodul tragenden Endgerätes, insbesondere als unterbrechungsgesteuerter Hintergrundprozess ab.

Eine Unterbrechung "Interrupt" wäre beispielsweise ein von dem Endgerät gefordertes Übertragen von Daten. Tritt dies auf, wird in einem zweiten Schritt S2 ein erstes Datenpaket, der im Allgemeinen mehreren Datenpakete, gesendet.

Dazu wird Datenpaket zunächst nach einem voreingestellten ersten Datenpakettyp aufgebaut, welches bei Bluetooth-Systemen im Allgemeinen ein DM5 Paket sein wird.

Das DM5 Paket weist einen Nutzdatenbereich von 226 Bytes, wobei dieser Bereich auch Fehlercodierung enthält (Forward Error Correction, FEC) zum Nutzdatenbereich kommen 16-bit CRC hinzu, so dass die Übertragung eines derartigen Pakets bis zu fünf Zeitschlitze in Anspruch nimmt.

Anschließend erfolgt in einem dritten Schritt S3 eine Erfassung der Kanalgüte eines für diese Datenübertragung genutzten Kanals.

Als ein Maß zur Bestimmung der Kanalgüte kann hierbei die Anzahl der Paketwiederholungen dienen, welche beim Sender selbst ausgewertet werden kann.

Dieses Maß kann jedoch mit anderen Metriken kombiniert oder auch durch andere Metriken ersetzt werden, die zur Schätzung der Kanalqualität herangezogen werden können, wobei auch Metriken zum Einsatz kommen können, die eine Empfängerseitige Auswertung ermöglichen.

Beispielsweise kann dies derart erfolgen, dass ein Empfänger - ein weiteres mit einem Bluetooth-Funkmodul ausgestattetes Endgerät - des Datenpaketes die Fehlerrate des empfangenen Datenpakets (Cyclical Redundancy Check, CRC-Fehler) oder die Empfangsfeldstärke eines das Datenpaket übermittelnden Signals (Received Signal Strength Indication, RSSI) auswertet, so dass in einem vierten Schritt S4 überprüft werden kann, ob ein Wechsel des aktuell verwendeten Datenpakettyps erforderlich ist.

Die im vierten Schritt S4 durchgeführte Überprüfung erfolgt beispielsweise derart, dass beim Erreichen eines ersten Schwellenwertes durch die Kanalgüte, beispielsweise wenn die Anzahl der Paketwiderholungen einen Wert unterschritten hat, der dem Sender - nach Einführung entsprechender Signalisierungsverfahren in den Standard - auch vom Empfänger signalisiert werden könnte, im Sender die Entscheidung getroffen wird einen geeigneteren Datenpakettyp auszuwählen.

Bei einem gemäß Bluetooth Standard funktionierenden System wird es sich hierbei im Allgemeinen um den Datenpakettyp DH5 handeln.

Das DH5 Paket ist ähnlich aufgebaut wie das DM5 Paket mit dem Unterschied, dass es einen Nutzdatenbereich von 341 Bytes Länge aufweist, wobei der wesentliche Unterschied darin liegt, dass beim DH keine Fehlercodierung im Nutzdatenbereich enthalten ist, jedoch genauso wie das DM5 noch 16 Bit CRC hinzukommen sowie ebenfalls in bis zu fünf Zeitschlitzen übertragen wird.

Durch die Überprüfung ob ein aktuell verwendeter Pakettyp zu den aktuellen Eigenschaften des Übertragungskanals passt, wird erreicht, dass bei einer Änderung der Güte des Ubertragungskanals im Wesentlichen eine maximal mögliche Netto- bzw. User-Datenrate gewährleistet wird.

Wenn die Güte des Übertragungskanals wieder abnimmt, was sich durch ein Sinken die Netto- bzw. User-Datenrate bemerkbar macht, da sich die Anzahl der Bitfehler erhöht, wird in einem nächsten Durchlauf des vierten Schrittes S4 der erste Datenpakettyp gewählt.

Eine Ergänzung bzw. Alternative zum dritten Schritt S3 und vierten Schritt S4 ergibt sich durch Festlegen eines ersten Datenpakettyps als Default, wobei um eine Verbesserung der Kanaleigenschaften feststellen zu können, in regelmäßigen Abständen der zweite Datenpakettyp festgelegt wird, so dass sich eine höhere Netto- bzw. User-Datenrate ergibt.

Alternativ kann im vierten Schritt S4 auch ein zweiter Schwellwert als untere Grenze für die Kanalgüte eingesetzt werden, der erreicht wird wenn beispielsweise Anzahl der erfassten Paketwiederholungen einen Wert übersteigt, so dass bei Erreichen dieses zweiten Schwellwertes die Wahl auf den ersten Datenpakettyp fällt.

Anhand des für ein gemäß Bluetooth funktionierendes Telekommunikationseinrichtung gewählten Ausführungsbeispiels konkretisiert bedeutet dies, dass zunächst im vierten Schritt S4 eine Umschaltung vom 2/3 FEC codierten ersten Datenpakettyp DM5 auf den uncodierten zweiten Datenpakettyp DH5 umgeschaltet wird. Wenn im späteren Verlauf die Güte des Übertragungskanals wieder abnimmt, sinkt die Netto- bzw. User-Datenrate durch die Erhöhung der Bitfehler.

Dies führt zu einer Erhöhung der Anzahl der Paketwiederholungen steigt, die im Schritt S4 als Maß zur Bestimmung der Qualität des Übertragungskanals dient.

Übersteigt die Anzahl der Paketwiederholungen einen bestimmten festzulegenden Wert, sinkt die Güte unter den zweiten Schwellwert, so dass der Sender in diesem Fall den besser geeigneten ersten Datenpakettyp DM5 auswählt.

Ein Wiederumschalten auf den zweiten Datenpakettyp DH5 kann dann bei Unterschreiten einer unteren Grenze für die Anzahl an Paketwiederholungen beim Senden von DM5-Paketen, d.h. bei Erreichen des ersten Schwellwertes, erfolgen.

Alternativ hierzu kann in Regelmäßigen Abständen auf Übertragung Datenpaketen gemäß zweiten Datenpakettyp umgeschaltet werden, und dann, nach weiterem Durchführen des ersten Schrittes S1 und zweiten Schrittes S2, im dritten Schritte S3 eine Verbesserung der Kanaleigenschaften feststellen in dem man prüft, ob sich die Anzahl der Paketwiederholungen erhöht, ist dies nicht der Fall wird im vierten Schritt S4 der zweite Datenpakettyp beibehalten, sonst wird wieder in der erste Datenpakettyp gewählt.

Wird im vierten Schritt S4 ein Wechsel des Datenpakettyps festgelegt, muss in einem fünften Schritt S5 festgestellt werden ob es sich bei der Datenquelle um den Master oder Slave eines Telekommunikationsnetzes handelt. Diese Überprüfung ist in Systemen mit einer hierarchischen Struktur, bei der eine übergeordnete Kommunikationseinrichtung verbindungstechnische Parameter vorgibt, erforderlich. Eine solche hierarchische Struktur ist insbesondere bei gemäß Bluetooth funktionierenden Systemen durch die dortige Master-Slave Architektur gegeben.

Ergibt die Abfrage im fünften Schritt, dass es sich um den Master handelt, kann die Umschaltung auf einen anderen Datenpakettyp sofort im folgenden siebten Schritt S6 umgesetzt werden und das Verfahren in den Ausgangszustand im ersten Schritt S1 wechseln. Handelt sich es um einen Slave, so muss dieser zunächst in einem sechsten Schritt S6 eine Anforderung an den Master senden, damit der siebte Schritt S7 durchgeführt werden kann.

Der beschriebene erfindungsgemäße Ablauf des Verfahrens soll nicht nur auf Bluetooth-Systeme beschränkt sein, sondern kann Datenanwendungen bei denen eine möglichst hohe Datenrate, auch unter erschwerten Bedingungen wie z.B. an der Reichweitengrenze oder bei Störungen durch andere Sender (z.B. Mikrowelle), erwünscht ist, eingesetzt werden.

## Patentansprüche

1. Verfahren zur Paketdatenübertragung in einem Funkkommunikationssystem, welches nach dem Bluetooth-Standard funktioniert, mit einem ersten Datenpakettyp und zumindest einem alternativen zweiten Datenpakettyp mit folgenden Merkmalen:
a) Qualitätsänderungen eines für eine Verbindung zwischen einer Datenquelle und Datensenke genutzten Übertragungskanals werden erfasst, **gekennzeichnet durch** folgende Schritte:
b) abhängig von der erfassten Qualitätsänderung wird ein Datenpakettyp eines folgenden über den Übertragungskanal zu übertragenden Datenpaketes gewählt, wobei
c) der erste Datenpakettyp gemäß Bluetooth als ein DM5 Paket ausgestaltet wird und wobei
d) der zweite Datenpakettyp gemäß Bluetooth als ein DH5 Paket ausgestaltet wird.

2. Verfahren nach Anspruch 1, **dadurch gekennzeichnet, dass** bei einem Übertragungskanal mit einer guten Qualität der zweite Datenpakettyp gewählt wird, wobei der zweite Datenpakettyp einen niedrigeren Steuerdatenanteil als der erste Datenpakettyp aufweist.

3. Verfahren nach Anspruch 2, **dadurch gekennzeichnet, dass** bei einem Übertragungskanal mit einer guten Qualität der zweite Datenpakettyp gewählt wird, wobei der zweite Datenpakettyp eine Fehlercodierung geringer Bitzahl aufweist.

4. Verfahren nach Anspruch 2 oder 3, **dadurch gekennzeichnet, dass** eine gute Qualität bei Erreichen eines ersten Schwellwertes einer die Qualität des Übertragungskanals wiedergebenden Größe signalisiert wird.

5. Verfahren nach einem der Ansprüche 2 bis 4, **dadurch gekennzeichnet, dass** bei schlechter Qualität der erste Datenpakettyp gewählt wird, wobei eine schlechte Qualität bei Erreichen eines zweiten Schwellwertes signalisiert wird.

6. Verfahren nach einem der Ansprüche 1 bis 3, **dadurch gekennzeichnet, dass** die Qualitätsänderung auf Seiten der Datenquelle erfasst wird.

7. Verfahren nach einem der Ansprüche 1 bis 3, **dadurch gekennzeichnet, dass**
a) die Qualitätsänderung auf Seiten der Datensenke erfasst wird,
b) eine die Qualitätsänderung angebende Nachricht von der Datensenke zur Datenquelle übertragen wird.

8. Verfahren nach einem der vorhergehenden Ansprüche, **dadurch gekennzeichnet, dass** zur Bestimmung der Qualitätsänderung eine Anzahl von Paketwiederholungen erfasst wird und/oder eine die Qualität des Übertragungskanals wiedergebende Feldstärkemessung empfangener Signale gemessen wird.

## Claims

1. Method for packet data transmission in a communications system with a first data packet type and at least one alternative second data packet type with the following features:
a) Changes in quality of a transmission channel used for a connection between a first data source and a data sink are recorded, identified by the following steps
b) Depending on the change in quality recorded, a data packet type of a subsequent data packet to be sent over the transmission channel is selected.
c) the first data packet type in accordance with Bluetooth is embodied as a DM5 packet and where
d) the second data packet type in accordance with Bluetooth is embodied as a DH5 packet

2. Method in accordance with Claim 1, **characterized in that**, for a transmission channel with a good quality this second data packet type is selected, in which case the second data packet type features a lower proportion of control data than the first data packet type.

3. Method in accordance with Claim 2, **characterized in that**, for a transmission channel with a good quality the second data packet type is selected, in which case the second data packet type features a lower number of error coding bits.

4. Method in accordance with Claim 2 or 3, **characterized in that** a good quality is signalled on reaching a first threshold value of a variable reflecting the quality of the transmission channel.

5. Method in accordance with one of the Claims 2 to 4, **characterized in that** with bad quality the first data packet type is selected, in which case a bad quality is signalled when a second threshold value is reached.

6. Method in accordance with one of the Claims 1 to 3, **characterized in that** the change in quality is recorded on the data source side..

7. Method in accordance with one of the Claims 1 to 3, **characterized in that**
a) the change in quality is recorded on the data sink side,
b) a message specifying the change in quality is transmitted from the data sink to the data source.

8. Method in accordance with one of the previous claims, **characterized in that**, to determine the change in quality, a number of packet retries are recorded and/or a field strength measurement of received signals is taken, reflecting the quality of the transmission channel.

## Revendications

1. Procédé pour la transmission de paquets de données dans un système de radio communication, qui fonctionne selon le standard Bluetooth, avec un premier type de paquet de données et au moins un second type de paquet de données comme alternative avec les caractéristiques suivantes :
a) les variations de qualité d'un canal de transmission utilisé pour une liaison entre une source de données et un collecteur de données sont enregistrées, **caractérisées par** les étapes suivantes :
b) en fonction de la variation de qualité enregistrée, on choisit un type de paquet de données d'un paquet de données suivant à transmettre par le canal de transmission,
c) le premier type de paquet de données selon Bluetooth étant conçu comme un paquet DM5 et
d) le second type de paquet de données selon Bluetooth étant conçu comme un paquet DH5.

2. Procédé selon la revendication 1, **caractérisé en ce que**, dans le cas d'un canal de transmission avec une bonne qualité, on choisit le second type de paquet de données, le second type de paquet de données présentant une part de données de commande plus faible que le premier type de paquet de données.

3. Procédé selon la revendication 2, **caractérisé en ce que**, dans le cas d'un canal de transmission avec une bonne qualité, on choisit le second type de paquet de données, le second type de paquet de données présentant un codage d'erreur avec un faible nombre de bits.

4. Procédé selon la revendication 2 ou 3, **caractérisé en ce qu'**une bonne qualité est signalée lorsqu'on atteint une première valeur seuil d'une grandeur restituant la qualité du canal de transmission.

5. Procédé selon l'une quelconque des revendications 2 à 4, **caractérisé en ce que**, dans le cas d'une mauvaise qualité, on choisit le premier type de paquet de données, une mauvaise qualité étant signalée lorsqu'on atteint une seconde valeur seuil.

6. Procédé selon l'une des revendications 1 à 3, **caractérisé en ce que** la variation de qualité est enregistrée du côté de la source de données.

7. Procédé selon l'une quelconque des revendications 1 à 3, **caractérisé en ce que**
a) la variation de qualité est enregistrée du côté du collecteur de données,
b) un message indiquant la variation de qualité est transmis du collecteur de données à la source de données.

8. Procédé selon l'une quelconque des revendications précédentes, **caractérisé en ce que**, pour déterminer la variation de qualité, on enregistre un nombre de répétitions de paquets et/ou on effectue une mesure d'intensité de champ de signaux reçus, restituant la qualité du canal de transmission.
